# EUROPEAN PATENT SPECIFICATION

(11) **EP 1 211 166 B1**
(45) Date of publication and mention of the grant of the patent: **27.04.2005**
(21) Application number: 01128645.7
(22) Date of filing: 30.11.2001
(51) Int. Cl.: B62D 33/06

(54) **Cabin for an industrial vehicle**
Kabine eines industriellen Fahrzeuges
Cabine pour véhicule industriel

(30) Priority: 01.12.2000 IT TO001127
(43) Date of publication of application: 05.06.2002
(73) Proprietor: IVECO S.p.A., 10156 Torino (IT)
(72) Inventor: Nicosia, Biagio, 10141 Torino (IT)
(74) Representative: Gervasi, Gemma, Dr.

(56) References cited:
- EP-A- 0 685 381
- EP-A- 0 930 222
- DE-C- 4 440 139

## Description

The present invention relates to a cabin for an industrial vehicle.

As is known, the cabins of industrial vehicles are currently produced by means of bodywork members welded together to form a bearing structure.

The stamping and welding plant for the production of bodywork members of known type is particularly costly; moreover, welding entails relatively long assembly times and is a process that is energy-intensive and has a substantial environmental impact, partly because of the auxiliary operations that it comprises, such as the degreasing of the components to be welded. Lastly, it is particularly difficult to replace the bodywork members in the event of damage to the cabin.

The object of the present invention is to provide a cabin for an industrial automobile vehicle which is free from the drawbacks described above and which can in particular be produced in a rapid and economic way with a low environmental impact and enables the bodywork members to be readily replaced.

The present invention therefore relates to a cabin as defined in claim 1. A cabin according to the features of the preamble of claim 1 is described in EP-A-0 685 381.

The present invention further relates to a method for the assembly of a cabin according to the features of claim 9.

The invention is set out in further detail below with reference to a preferred embodiment thereof, given purely by way of non-limiting example and made with reference to the accompanying drawings, in which:
Fig. 1 is a perspective view of a cabin for an industrial vehicle of the present invention, broken down into its components;
Fig. 2 is a view on an enlarged scale and in cross-section of a detail of the cabin of Fig. 1.

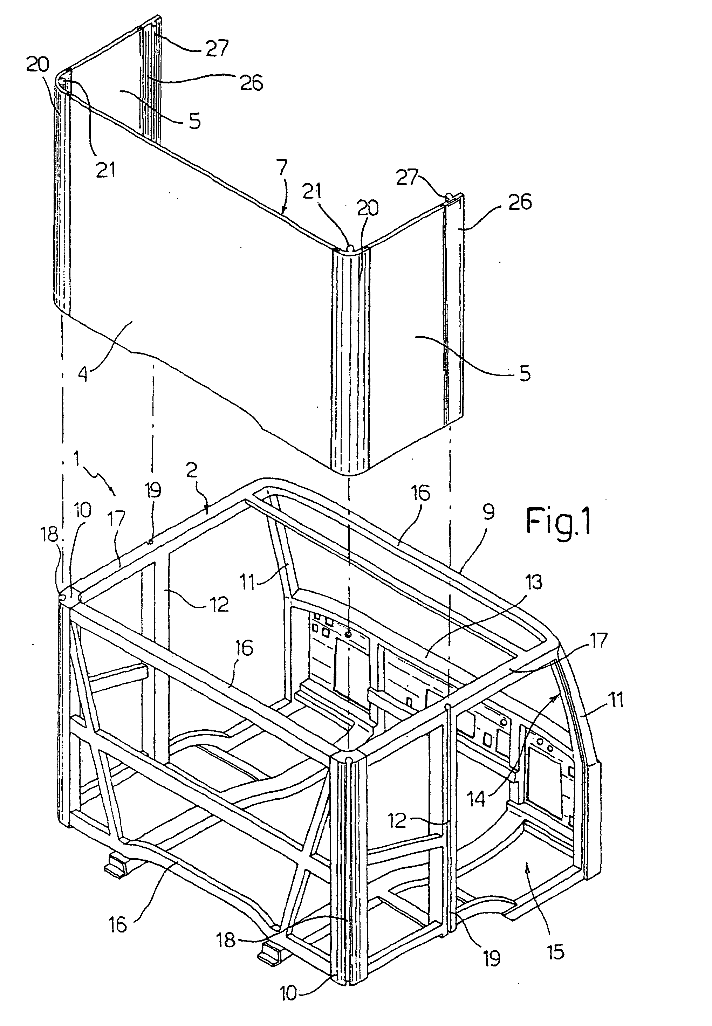

In Fig. 1, a cabin for an industrial vehicle is shown overall by 1 and comprises a frame 2, a rear wall 4, and a pair of side walls 5.

The frame 2 is formed by beam members 9 advantageously formed from aluminium or steel profiled sections welded together and comprising, in particular, a pair of rear uprights 10, a pair of front uprights 11 connected together at the bottom by a front wall 13 of the cabin and forming between one another at the top a space 14 for a windscreen (not shown), and a pair of side uprights 12 disposed in an intermediate position between the rear uprights 10 and the front uprights 11 and bounding respective door spaces 15 with the front uprights 12.

The frame 2 further comprises a plurality of transverse members 16 and longitudinal members 17.

The rear uprights 10 have, along their outer rear corners, respective grooves 18 extending over the whole length of the uprights and having a substantially circular cross-section.

The side uprights 12 have, along their outer surfaces, respective guide groves 19 extending over the entire length of the uprights and having a substantially circular cross-section.

According to the present invention, the rear wall 4 and the side walls 5 are connected together in a detachable manner by means of a pair of first angular profiled sections 20 so as to form a pre-assembled unit 7.

In particular, the first profiled sections 20 are of elastomer material, have an L-shaped cross-section, and are provided with respective cylindrical ribs 21 extending along their inner corners.

The first profiled sections 20 are provided, along their edges, with pairs of lips 22 forming respective seats 23 for respective lateral edges 25 of the walls 4 or 5. Advantageously, the lips 22 contain respective metal reinforcing strips 24 between which the above-mentioned edges 25 of the walls 4, 5 are inserted.

The pre-assembled unit 7 advantageously comprises a pair of second profiled sections 26 for the connection of the side walls 5 to the side uprights 12.

The second profiled sections 26 have a substantially elongate rectangular cross-section in the direction parallel to the side walls 5 and have, along their inner surfaces, respective substantially cylindrical ribs 27. The profiled sections 26 are provided, along their edges facing the side walls 5, with respective pairs of lips 22 identical to those previously described with respect to the first profiled sections 20 and forming respective seats 23 for the corresponding lateral edges 25 of the side walls 5.

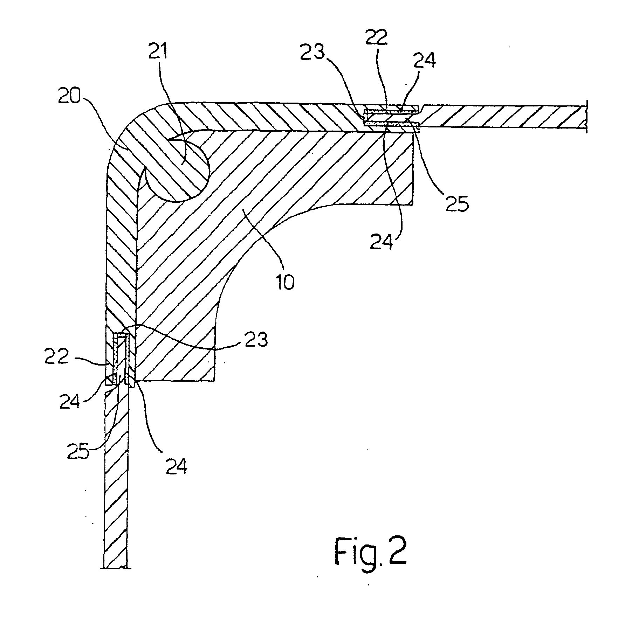

Preferably (Fig. 2), the edges 25 of the walls 4, 5 penetrate the relative seats 23 of the first and second profiled sections 20, 26 up to a depth smaller than the depth of the seats themselves so as to allow for the compensation of any differential heat expansions.

In operation, the pre-assembled unit 7 is mounted from above on the frame 2 so that the ribs 21 of the first profiled sections 20 and the ribs 27 of the second profiled sections 26 are inserted in the seats 18, 19 of the uprights 10 and 12 and slide longitudinally in these until assembly is complete.

An examination of the characteristic features of the cabin for an industrial automobile vehicle of the present invention shows the advantages that it can provide.

In particular, it enables rapid, easy and inexpensive assembly of the rear and side walls, without the need for welding operations in respect of these walls. Moreover, an individual wall member can be rapidly replaced, in the event of damage to the bodywork.

It will be appreciated that modifications and variations may be made to the cabin for an industrial automobile vehicle as described and illustrated, without thereby departing from the scope of protection of the present invention.

For instance, the shapes of the means for connecting the walls 4, 5 and the pre-assembled unit 7 and the frame 2 could be varied.

## Claims

1. A cabin (1) for an industrial automobile vehicle comprising a frame (2) formed by a plurality of beam members (9), **characterized in that** the cabin (1) comprises a pre-assembled unit (7), formed of a rear wall (4), a pair of side walls (5) and detachable connection means (20) interposed between the rear wall and each of the side walls and **in that** means (18, 19, 21, 27) are provided for mounting the pre-assembled unit (7) on the frame (2).

2. A cabin (1) for an industrial automobile vehicle as claimed in claim 1, **characterised in that** the detachable connection means (20) comprise a pair of angular profiled sections (20) each coupled to the rear wall (4) and to a respective side wall (5).

3. A cabin (1) as claimed in claim 2, **characterised in that** the means (18, 19, 21, 27) for mounting the pre-assembled unit (7) on the frame comprise means (18, 21) for coupling the angular profiled sections (20) with respective rear uprights (10) of the frame.

4. A cabin (1) for an industrial automobile vehicle as claimed in claim 4, **characterised in that** the means (18, 21) for coupling the angular profiled sections (20) and the respective rear uprights (10) of the frame (2) comprise prismatic guide means (18, 21).

5. A cabin (1) for an industrial automobile vehicle as claimed in claim 5, **characterised in that** the prismatic guide means (18, 21) comprise ribs (21) provided on the angular profiled sections (20) and corresponding grooves (18) provided on the rear uprights (10), wherein the ribs (21) and the grooves (18) can be coupled in a sliding manner.

6. A cabin (1) for an industrial automobile vehicle as claimed in any one of the preceding claims, **characterised in that** the angular profiled sections (20) have, along their edges, respective seats (23) for a lateral edge (25) of the rear wall (4) and a first lateral edge (25) of a respective side wall (5).

7. A cabin (1) for an industrial automobile vehicle as claimed in any one of the preceding claims, **characterised in that** the angular profiled sections (20) are made from elastomer material.

8. A cabin (1) as claimed in any one of the preceding claims, **characterised in that** the means (18, 19, 21, 27) for mounting the pre-assembled unit (7) on the frame (2) comprise a pair of profiled sections (26) coupled to respective second edges of the lateral walls (5) and provided with means (27) for coupling with respective side uprights (11) of the frame (2).

9. A method for the assembly of a cabin (1) for an industrial automobile vehicle comprising a frame (2) formed by a plurality of beam members (9), a rear wall (4), a pair of side walls (5), which method comprises a first stage of detachable connection between the rear wall (4) and each of the side walls (5) to form a pre-assembled unit (7) and a second stage of assembly of the pro-assembled unit (7) on the frame (2).

10. A method as claimed in claim 9, **characterised in that** the first stage comprises the operation of connecting the rear wall (4) to the side walls (5) by means of respective angular profiled sections (20) and **in that** the second stage comprises the insertion from above of the pre-assembled unit (7) on the frame (2) connecting each of the angular profiled sections (20) with a respective rear upright (10) of this frame (2).

## Patentansprüche

1. Kabine (1) für ein industrielles Kraftfahrzeug, umfassend einen aus einer Vielzahl von Balkenelementen (9) aufgebauten Rahmen (2), **dadurch gekennzeichnet, dass** die Kabine (1) eine vormontierte Einheit (7) umfasst, die aus einer Rückwand (4), einem Paar von Seitenwänden (5) und zwischen der Rückwand und einer jeden der Seitenwände eingefügten demontierbaren Verbindungsmitteln (20) aufgebaut ist, und **dadurch**, dass Mittel (18, 19, 21, 27) vorhanden sind, um die vormontierte Einheit (7) auf den Rahmen zu montieren.

2. Kabine (1) für ein industrielles Kraftfahrzeug gemäß Anspruch 1, **dadurch gekennzeichnet, dass** die demontierbaren Verbindungsmittel (20) ein Paar Winkelprofile (20) umfassen, die jeweils mit der Rückwand (4) und der jeweiligen Seitenwand (5) verbunden sind.

3. Kabine (1) gemäß Anspruch 2, **dadurch gekennzeichnet, dass** die Mittel (18, 19, 21, 27) zur Montage der vormontierten Einheit (7) auf dem Rahmen Mittel (18, 21) umfassen, um die Winkelprofile (20) mit dem jeweiligen hinteren Pfosten (10) des Rahmens zu verbinden.

4. Kabine (1) für ein industrielles Kraftfahrzeug gemäß Anspruch 3, **dadurch gekennzeichnet, dass** die Mittel (18, 21) zum Verbinden der Winkelprofile (20) mit dem jeweiligen hinteren Pfosten (10) des Rahmens (2) Prismenführungsmittel (18, 21) umfassen.

5. Kabine (1) für ein industrielles Kraftfahrzeug gemäß Anspruch 4, **dadurch gekennzeichnet, dass** die Prismenführungsmittel (18, 21) auf den Winkelprofilen (20) ausgebildete Rippen (21) und in den hinteren Pfosten (10) ausgebildete entsprechende Nuten (18) umfassen, wobei die Rippen (21) und die Nuten (18) durch Ineinanderschieben miteinander verbunden werden können.

6. Kabine (1) für ein industrielles Kraftfahrzeug gemäß einem der vorherigen Ansprüche, **dadurch gekennzeichnet, dass** die Winkelprofile (20) entlang ihrer Kanten jeweils Aufnahmenuten (23) für eine Seitenkante (25) der Rückwand (4) und eine erste Seitenkante (25) der entsprechenden Seitenwand (5) aufweisen.

7. Kabine (1) für ein industrielles Kraftfahrzeug gemäß einem der vorherigen Ansprüche, **dadurch gekennzeichnet, dass** die Winkelprofile (20) aus einem Elastomermaterial bestehen.

8. Kabine (1) gemäß einem der vorherigen Ansprüche, **dadurch gekennzeichnet, dass** die Mittel (18, 19, 21, 27) zur Montage der vormontierten Einheit (7) auf dem Rahmen (2) ein Paar von Profilen (26) umfassen, die jeweils mit zweiten Kanten der Seitenwände (5) verbunden sind, und mit Mitteln (27) versehen sind, um sie mit den jeweiligen Seitenpfosten (11) des Rahmens (2) zu verbinden.

9. Verfahren zur Montage einer Kabine (1) für ein industrielles Kraftfahrzeug, umfassend einen aus einer Vielzahl von Balkenelementen (9) aufgebauten Rahmen (2), eine Rückwand (4), ein Paar von Seitenwänden (5), wobei das Verfahren Folgendes umfasst: eine erste Stufe, in der eine demontierbare Verbindung zwischen der Rückwand (4) und einer jeden der Seitenwände (5) hergestellt wird, um eine vormontierte Einheit (7) herzustellen, und eine zweite Stufe, in der die vormontierte Einheit (7) auf den Rahmen (2) montiert wird.

10. Verfahren gemäß Anspruch 9, **dadurch gekennzeichnet, dass** die erste Stufe einen Vorgang umfasst, in dem die Rückwand (4) jeweils mittels Winkelprofilen (20) mit den Seitenwänden (5) verbunden wird, und **dadurch**, dass die zweite Stufe das Einsetzen der vormontierten Einheit (7) in den Rahmen (2) von oben umfasst, wobei jedes der Winkelprofile (20) mit dem jeweiligen hinteren Pfosten (10) dieses Rahmens (2) verbunden wird.

## Revendications

1. Cabine (1) pour un véhicule automobile industriel comprenant un châssis (2) formé par plusieurs éléments de poutre (9), **caractérisée en ce que** la cabine (1) comprend une unité préassemblée (7) formée par une paroi arrière (4), deux parois latérales (5) et des moyens de connexion relâchables (20) interposés entre la paroi arrière et chacune des parois latérales, et **en ce que** des moyens (18, 19, 21, 27) sont prévus pour monter l'unité préassemblée (7) sur le châssis (2).

2. Cabine (1) pour un véhicule automobile industriel selon la revendication 1, **caractérisée en ce que** les moyens de connexion relâchables (20) comprennent deux sections angulaires profilées (20) chacune couplée à la paroi arrière (4) et à une paroi latérale respective (5).

3. Cabine (1) selon la revendication 2, **caractérisée en ce que** les moyens (18, 19, 21, 27) pour monter l'unité préassemblée (7) sur le châssis comprennent des moyens (18, 21) pour coupler les sections angulaires profilées (20) avec des montants arrières respectifs (10) du châssis.

4. Cabine (1) pour un véhicule automobile industriel selon la revendication 4, **caractérisée en ce que** les moyens (18, 21) pour le couplage des sections angulaires profilées (20) et des montants arrières respectifs (10) du châssis (2) comprennent des moyens de guidage prismatiques (18, 21).

5. Cabine (1) pour un véhicule automobile industriel selon la revendication 5, **caractérisée en ce que** les moyens de guidage prismatiques (18, 21) comprennent des nervures (21) prévues sur les sections angulaires profilées (20) et des rainures correspondantes (18) prévues sur les montants arrière (10), où les nervures (21) et les rainures (18) peuvent être couplées d'une manière coulissante.

6. Cabine (1) pour un véhicule automobile industriel selon l'une des revendications précédentes, **caractérisée en ce que** les sections angulaires profilées (20) possèdent, le long de leurs bords, des sièges respectifs (23) pour un bord latéral (25) de la paroi arrière (4) et un premier bord latéral (25) d'une paroi latérale respective (5).

7. Cabine (1) pour un véhicule automobile industriel selon l'une des revendications précédentes, **caractérisée en ce que** les sections angulaires profilées (20) sont réalisées en un matériau élastomère.

8. Cabine (1) selon l'une des revendications précédentes, **caractérisée en ce que** les moyens (18, 19, 21, 27) pour monter l'unité préassemblée (7) sur le châssis (2) comprennent deux sections profilées (26) couplées à des seconds bords respectifs des parois latérales (5) et pourvues de moyens (27) pour le couplage avec des montants latéraux respectifs (11) du châssis (2).

9. Procédé d'assemblage d'une cabine (1) pour un véhicule automobile industriel comprenant un châssis (2) formé par plusieurs éléments de poutre (9), une paroi arrière (4), deux parois latérales (5), ledit procédé comprenant une première étape de connexion relâchable entre la paroi arrière (4) et chacune des parois latérales (5) pour former une unité préassemblée (7) et une seconde étape d'assemblage de l'unité préassemblée (7) sur le châssis (2).

10. Procédé selon la revendication 9, **caractérisé en ce que** la première étape comprend l'opération consistant à relier la paroi arrière (4) aux parois latérales (5) par des sections profilées angulaires respectives (20), et **en ce que** la seconde étape comprend l'insertion depuis au-dessus de l'unité préassemblée (7) sur le châssis (2) reliant chacune des sections angulaires profilées (20) à un montant arrière respectif (10) de ce châssis (2).
